(19) Europäisches Patentamt
European Patent Office
Office européen des brevets

(11) **EP 2 107 696 A1**

(12) **EUROPEAN PATENT APPLICATION**

(43) Date of publication:
**07.10.2009 Bulletin 2009/41**

(51) Int Cl.:
***H04B 7/02*** (2006.01)

(21) Application number: **08006256.5**

(22) Date of filing: **31.03.2008**

| | |
|---|---|
| (84) Designated Contracting States: **AT BE BG CH CY CZ DE DK EE ES FI FR GB GR HR HU IE IS IT LI LT LU LV MC MT NL NO PL PT RO SE SI SK TR** Designated Extension States: **AL BA MK RS** (71) Applicants: • **Mitsubishi Electric R&D Centre Europe B.V.** **1119 NS  Schiphol Rijk (NL)** Designated Contracting States: **FR** • **MITSUBISHI ELECTRIC CORPORATION** **Chiyoda-ku** **Tokyo 100-8310 (JP)** Designated Contracting States: **AT BE BG CH CY CZ DE DK EE ES FI GB GR HR HU IE IS IT LI LT LU LV MC MT NL NO PL PT RO SE SI SK TR** | (72) Inventor: **Voyer, Nicolas** **CS 10806** **35708 Rennes Cedex 7 (FR)** (74) Representative: **Maillet, Alain** **Cabinet LE GUEN MAILLET** **5, place Newquay** **BP 70250** **35802 Dinard Cedex (FR)** |

(54) **Method and device for managing a set of  base stations of a  wireless cellular telecommunication network**

(57)    The present invention concerns a method for managing a set of base stations of a wireless cellular telecommunication network, wherein a mobile terminal receives a flow of data from the base stations of the set of base stations. The mobile terminal:
- determines a first subset ($S_1$) of base stations comprising base stations which may continue to transfer to the mobile terminal signals representative of the flow of data,
- determines a second subset ($S_2$) of at least one base station which comprises at least one base station which is not comprised in the first subset,
- transfers a message to each base station comprised in the second subset requesting the base station to switch to a communication mode which does not interfere with signals representative of the flow of data transferred to the mobile terminal by the base stations of the first subset.

Fig. 6

**Description**

The present invention relates generally to a method and a device for managing a set of base stations of a wireless cellular telecommunication network, wherein a mobile terminal receives a flow of data through radio channels from the base stations of the set of base stations.

In wireless cellular telecommunication networks, one transmitter transfers data to one receiver via one radio channel. When the receiver is moving away from the transmitter, the network routes data to the receiver via another transmitter enabling a handover between the two transmitters.

In wireless cellular telecommunication networks using Code Division Multiple Access scheme, a specific variant of handover has been developed, which is called soft handover. In such situation, the same data is transmitted by different transmitters in the vicinity of a mobile terminal which includes multiple receivers. The mobile terminal combines the energies of the signal received from the multiple transmitters in order to increase the quality of the received signal.

Interference produced among the signals received by the mobile terminal from the different transmitters over the same resource element (time/frequency slot) can be reduced e.g. in conventional RAKE receivers of CDMA signals, which exhibit good interference reduction properties, according to well known spread spectrum communication theory.

In a variant of soft handover, called Site Selection Diversity Transmission, the mobile terminal can select which transmitter can transmit the data, among a set of transmitters assigned to the mobile terminal. The interference level produced to other mobile terminals in the network is reduced as only the best transmitter transmits signal with the minimum power level needed to reach the receiver. In case of independent fading of the radio propagation channels from the multiple transmitters, SSDT can be an effective technique to avoid fading and degradation of signal level in handover areas.

SSDT requires that the scheduling of data over the multiple transmitters is controlled by a central entity called Radio Network Controller. The Radio Network controller transmits the data to each transmitter, even if data will not be used by the transmitter. The transmitter within the set of transmitters, which can transmit the data will ultimately be selected by the mobile terminal. When the mobile terminal indicates to all transmitters comprised in the set of transmitters, which transmitter should transmit the data, the data can be directly transmitted to the mobile terminal by the selected transmitter. Other non selected transmitters simply discard data which are not transmitted. That method produces significant overhead between RNC and transmitters.

It has to be noted here that the SSDT can not be applied as such in the Third Generation Project/ Long Term Evolution 3GPP/LTE network under discussion, where the network no longer deals with a central entity like a RNC. Furthermore, 3GPP/LTE networks are no longer based on CDMA, but rather based on OFDMA principles, which do not exhibit as good interference rejection capabilities. This, together with the absence of possibility to deliver the data flow simultaneously over multiple transmitters by e.g. a RNC central entity, prevent efficient implementation of soft handover.

The present invention aims at providing a method and a device which enable a mobile terminal to receive a flow of data from plural base stations and which avoid that the signals transferred by the base stations are interfered by signals transferred by other base stations.

To that end, the present invention concerns a method for managing a set of base stations of a wireless cellular telecommunication network, wherein a mobile terminal receives a flow of data from the base stations of the set of base stations, **characterised in that** the method comprises the steps executed by the mobile terminal of:

- determining a first subset of base stations comprising base stations which may continue to transfer to the mobile terminal signals representative of the flow of data,
- determining a second subset of at least one base station which comprises at least one base station of the set of base stations which is not comprised in the first subset,
- transferring a message to each base station comprised' in the second subset of at least one base station, the message requesting the base station to switch to a communication mode which does not interfere with signals representative of the flow of data transferred to the mobile terminal by the base stations of the first subset of base stations.

The present invention concerns also a device for managing a set of base stations of a wireless cellular telecommunication network, wherein a mobile terminal receives a flow of data from the base stations of the set of base stations, **characterised in that** the device is included in the mobile terminal and comprising:

- means for determining a first subset of base stations comprising base stations which may continue to transfer to the mobile terminal signals representative of the flow of data,
- means for determining a second subset of at least one base station which comprises at least one base station of the set of base stations which is not comprised in the first subset,
- means for transferring a message to each base station comprised in the second subset of at least one base station, the message requesting the base station to switch to a communication mode which does not interfere with signals representative of the flow of data transferred to the mobile terminal by the base stations of the first subset of base stations.

Thus, a mobile terminal may receive a flow of data from plural base stations without signals transferred by the base station or the base stations of the second subset interfering the signals transferred by the base stations of the first subset. The quality of delivery of the flow of data to the mobile terminal is increased.

According to a particular feature, the first subset of base stations and the second subset of at least one base station are determined by :

- measuring the quality of a radio channel between each base station in the set of base stations and the mobile terminal,
- obtaining, for each base station of the set of base stations which transfer signals representative of the flow of data to the mobile terminal, information from at least a part of the measurements and considering a third subset of base stations which transfer to the mobile terminal signals representative of the flow of data and considering a fourth subset of at least one base station which is in a communication mode which does not interfere with signals representative of the flow of data transferred to the mobile terminal by the base stations of the third subset of base stations,
- comparing information obtained from at least a part of the measurements considering the third subset of base stations and the fourth subset of at least one base station to another information obtained from at least another part of the measurements considering a fifth subset of base stations which transfer to the mobile terminal signals representative of the flow of data and considering a sixth subset of at least one base station which is in a communication mode which does not interfere with signals representative of the flow of data transferred to the mobile terminal by the base stations of the fifth subset of base stations,
- determining that the first subset of base stations and the second subset of at least one base station are the considered third subset of base stations and the fourth subset of at least one base station or are the considered fifth subset of base stations and the sixth subset of at least one base station according to the comparison of information to the other information.

Thus, by iteratively comparing information obtained for multiple combination of third, fourth and fifth and sixth subsets, optimum first subset of base stations and second subset of at least one base station can be found, which maximise the information resulting from the choice of first and second subsets.

According to a particular feature, the obtained information and other information are expectations of the maximum throughput which can be reached considering that the base stations in the third and fifth subsets of base stations transfer signals representative of the flow of data to the mobile terminal.

Thus, the first and second subsets can be found so as to maximise the expectation of the maximum throughput which can be reached for the delivery of the data flow to the mobile terminal. The deliver of the data flow to the mobile terminal can reach higher throughput and the quality of the communication is enhanced.

According to a particular feature, the obtained information and other information are expectations of the maximum throughput which can be reached considering that each base station in the fourth and sixth subsets of at least one base station is in a communication mode which does not interfere with signals representative of the flow of data transferred to the mobile terminal by the base stations in the third and fifth subsets of base stations.

Thus, the expectation of the maximum throughput which can be achieved is higher and closer to what can indeed be achieved considering that the base station in fourth and sixth subsets are in communication mode where they do not interfere with signals received by the mobile terminal from the base stations of the third and fifth subsets of base stations. The accuracy of the maximum throughput is higher, which can bring benefits to the operation of the mobile cellular network, e.g. in terms of traffic management.

According to a particular feature, each expectation of the maximum throughput is determined by calculating an expected Signal to Interference-plus-Noise Ratio for the signals to be received from the base stations in the third or fifth subset of base stations considering that each base station of the fourth or sixth subset of at least one base station is in the communication mode which does not interfere with signals representative of the flow of data transferred to the mobile terminal by the base stations of the third or fifth subset of base stations.

Thus, the expectation of the maximum throughput can be accurate and can fully take into consideration the fact that the base station in fourth or sixth subsets are in a communication mode where they do not interfere with signals representative of the flow of data transferred to the mobile terminal.

According to a particular feature, each expected Signal to Interference-plus-Noise Ratio for the signals to be received from the base stations in the third or fifth subset of base stations is determined considering that each power strength of signals transferred by each base station of the fourth or sixth subset of at least one base station is lower than a predetermined value.

Thus, the expectation of the maximum throughput can be accurate and can fully take into consideration the fact that the base stations in fourth or sixth subsets of at least one base station are transmitting signals with a power strength lower than the predetermined value.

According to a particular feature, a predetermined value is obtained for each base station of the second subset of at least one base station and each predetermined value is considered for the determination of the expected Signal to Interference-plus-Noise Ratio for the signals to be received from the base stations in the first subset of base stations.

Thus, the expectation of the maximum throughput can be accurate and can fully take into consideration the fact that the base stations in fourth or sixth subsets of at least one base station are transmitting signals with a power strength lower than a predetermined value which is specific to each base station.

According to a particular feature, each base station of the first subset of base stations transfers to the mobile terminal different parts of the flow of data.

Thus, the data throughput of the delivery of data flow to the mobile terminal is higher than if same parts were being transferred by all base stations in the first subset of base stations.

According to a particular feature, each base station of the first subset of base stations transfers to the mobile terminal the same flow of data.

Thus, the quality of reception of the data flow by the mobile terminal can be enhanced, as the receiver can benefit from bit energy received from multiple sources. When one radio channel between a base station and the mobile terminal suffers from fading, part of the data flow being transmitted on that radio channel can be yet received via other radio channel setup with other base station in the first subset of base stations.

According to a particular feature, the mobile terminal transfers to each base' station of the first subset of base stations, a message comprising the determined expected interference plus noise component of the signal to be received from the base station considering that each base station of the second subset of least one base station switches to a communication mode which does not interfere with signal representative of the flow of data transferred to the mobile terminal by the base stations of the first subset of base stations.

Thus, each base station in the first subset of base stations can adapt the transfer format of its communication with the mobile terminal so as to better fit with the expected interference plus noise level. The base station can fully take into consideration the choice made by the mobile terminal of the contents of the first and second subsets with a single SINR value, even though SINR conditions are not yet met at the time the value is transferred, due to the fact that other first and second subsets are being used at that time. This also reduces the latency of effectiveness of the invention as throughput can be maximised as soon as the base station knows that it belongs in the first subset of base stations.

According to a particular feature, at least one base station of the second subset of at least one base station :

- receives, from the mobile terminal, a message requesting the base station to switch to a communication mode which does not interfere with signals representative of the flow of data transferred to the mobile terminal by the base stations of the first subset of base stations,
- switches to a communication mode which does not interfere with signals representative of the flow of data transferred to the mobile terminal by the base stations of the first subset of base stations.

Thus, interferences produced by the base station to signals being received by the mobile terminal from base stations in the first subset of base stations are effectively reduced. This also reduces the latency of effectiveness of the invention as throughput can be maximised as soon as the base station knows that it belongs in the second subset of at least one base station.

According to a particular feature, the communication mode which does not interfere with signals representative of the flow of data transferred to the mobile terminal by the base stations of the first subset of base stations is a communication mode wherein the power strength of the signals transferred by the at least one base station of the second subset is lower than a predetermined value.

Thus, the base station reduces the interference produced to the signals being received by the mobile terminal from other base stations.

According to a particular feature, the base stations transfer the predetermined value to the mobile terminal.

Thus, the mobile terminal can accurately determine the first and second subsets according to the invention, and can accurately determine the SINR being reported to base stations in the first subset of base stations. As a result, the quality of communication of the mobile terminal is significantly enhanced.

According to a particular feature, the signals representative of a flow of data are transferred to the mobile terminal in a channel, the channel comprising plural channel resource elements and the method is executed for each channel resource element.

Thus, different first and second subsets can be determined for each channel resource element, and quality of communication can be enhanced in each channel resource element. Also, data which can not be transmitted to the mobile terminal over one resource element as it was not selected in the first subset for that resource element, can be transmitted to the mobile terminal via other resource element, as that base station can be selected in the first subset for that other resource element. As a result, the latency of delivery of data to the mobile terminal by a base station which is not the best serving base station can be reduced.

According to still another aspect, the present invention concerns a computer program which can be directly loadable into a programmable device, comprising instructions or portions of code for implementing the steps of the method according to the invention, when said computer program is executed on a programmable device.

Since the features and advantages relating to the computer program are the same as those set out above related to the method and device according to the invention, they will not be repeated here.

The characteristics of the invention will emerge more clearly from a reading of the following description of an example embodiment, the said description being produced with reference to the accompanying drawings, among which:

Fig. 1 is a diagram representing the architecture of the wireless cellular telecommunication network in which the present invention is implemented;
Fig. 2 is a diagram representing the architecture of a base station according to the present invention ;
Fig. 3 is a diagram representing the architecture of a mobile terminal of the wireless telecommunication system according to the present invention;
Fig. 4 is a diagram representing modules comprised in the base station according to the present invention ;
Fig. 5 is a diagram representing modules comprised in the wireless interface of a mobile terminal according to the present invention ;
Fig. 6 is a first example of an algorithm executed by a mobile terminal according to the present invention ;
Fig. 7 is an example of an algorithm executed by a mobile terminal in order to determine Signal to Interference-plus-Noise Ratios ;
Fig. 8 is a second example of an algorithm executed by a mobile terminal according to the present invention;
Fig. 9 is an example of an algorithm executed by a base station according to the present invention.

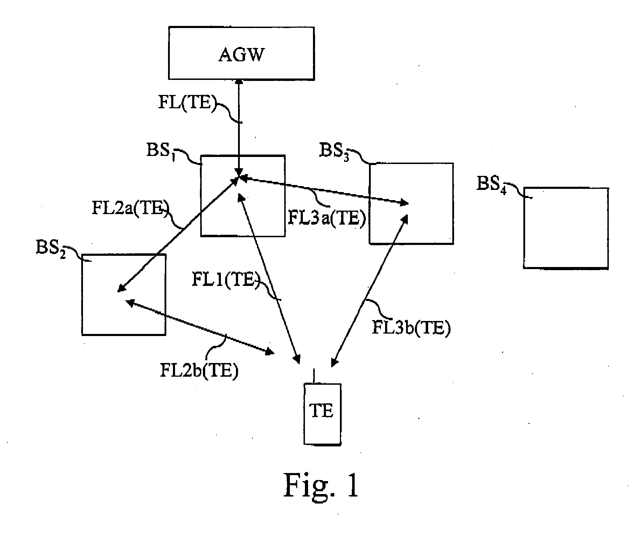

**Fig. 1** is a diagram representing the architecture of the wireless cellular telecommunication network in which the present invention is implemented.

In the cellular telecommunication network, a server AGW is connected to a plurality of base stations $BS_1$ to $BS_4$ through a telecommunication network. The telecommunication network is a dedicated wired network or a public network like a public switched network or an IP based network or a wireless network or an Asynchronous Transfer Mode network or a combination of above cited networks.

The telecommunication network enables the base stations $BS_1$ to $BS_4$ to be connected together if needed and enables the transfer between the base stations BS of at least a split of a flow of data or a duplicated flow of data intended to be transferred to a mobile terminal TE.

In the Fig. 1, only one server AGW is shown, but we can understand that a more important number of servers AGW can be used in the present invention.

On a similar way, only four base stations $BS_1$ to $BS_4$ are shown, but we can understand that a more important number of base stations BS are used in the present invention.

In Long Term Evolution (LTE) network currently under discussion in 3GPP, the server AGW is named an Access Gateway, and contains at least one Mobility Management Entity (MME) and one User Plane Entity (UPE). In General Packet Radio Service network, the server AGW is named a Serving GPRS Support Node (SGSN). In mobile IP network, the server AGW is named a Foreign Agent (FA) and in GSM network, the server AGW contains a Visitor Location Register (VLR) and a Mobile Switching Centre (MSC).

Each base station $BS_1$ to $BS_4$ manages at least one cell not shown in the Fig. 1. A cell of a base station BS is the area in which the signals transferred by the base station BS are received by a mobile terminal TE located in the cell at a level which is upper than a predetermined value.

In the Fig. 1, only one mobile terminal TE is shown, but we can understand that a more important number of mobile terminals TE are in the wireless cellular telecommunication network.

A base station BS handles a mobile terminal TE when the base station BS receives from the server AGW a flow of data to be transferred to the mobile terminal TE and/or transfers to the server AGW a flow of data transferred by the mobile terminal TE.

When a flow of data has to be transferred to the mobile terminal TE, the flow of data is transferred from the server AGW to the base station BS which handles the mobile terminal TE. That flow of data is shown by the arrow noted FL(TE).

The base station BS which handles the mobile terminal TE duplicates the flow of data to be transferred to the mobile terminal TE or splits the flow of data to be transferred to the mobile terminal TE in at least two splits. A first duplicated flow of data or split is directly transferred by the base station BS which handles the mobile terminal TE to the mobile terminal TE through its wireless interface and at least a second duplicated flow of data or split is transferred by the base station BS which handles the mobile terminal TE to the mobile terminal TE through its network interface and at least a via base station BS.

The mobile terminal TE receives the at least two duplications of the flow of data or splits and reconstructs the flow of data using the duplications of data or splits.

The Fig. 1 discloses an example in which the base station $BS_1$ handles the mobile terminal TE.

The base station $BS_1$ receives a flow of data represented by the arrow FL(TE) to be transferred to the mobile terminal TE. The base station $BS_1$ duplicates the flow of data to be transferred to the mobile terminal TE or splits the flow of data FL(TE) to be transferred to the mobile terminal TE in three duplications of the flow of data or in three splits. A first duplication of the flow of data or a first split represented by the arrow FL1(TE) is directly transferred by the base station $BS_1$ to the mobile terminal TE through its wireless interface. A second duplication of the flow of data or a second split represented by the arrow FL2a(TE) is transferred by the base station $BS_1$ to the base station $BS_2$ which transfers, through its wireless interface, the second duplication of the flow of data or the second split represented by the arrow FL2b(TE) to the mobile terminal TE. A third duplication of the flow of data or a third split represented by the arrow FL3a (TE) is transferred by the base station $BS_1$ to the base station $BS_3$ which transfers, through its wireless interface, the third duplication of the flow of data or the third split represented by the arrow FL3b(TE) to the mobile terminal TE.

The mobile terminal TE receives the three duplications or the three splits and reconstructs the flow of data using the three duplications or the three splits.

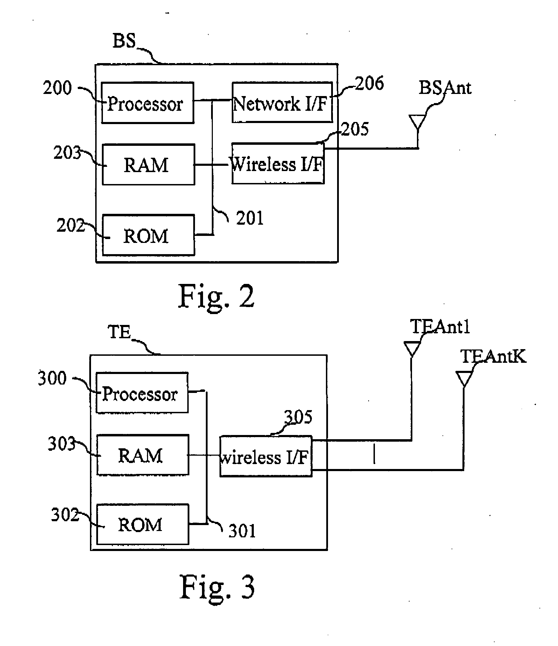

**Fig. 2** is a diagram representing the architecture of a base station according to the present invention.

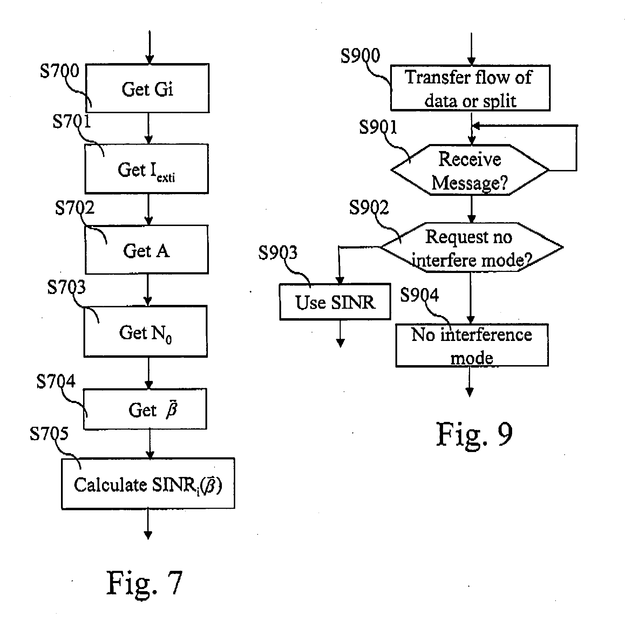

Each base station BS has, for example, an architecture based on components connected together by a bus 201 and a processor 200 controlled by the program as disclosed in the Fig. 9.

The bus 201 links the processor 200 to a read only memory ROM 202, a random access memory RAM 203, a network interface 206 and a wireless interface 205.

The memory 203 contains registers intended to receive variables, and for each mobile terminal TE being handled by the base station BS, information related to the set of base stations, network channel and radio channels via which duplications or splits of a data flow can be transferred to the mobile terminal TE. The memory 203 contains, for other mobile terminals TE, information related to the base station BS which handles the other mobile terminal TE and information related to the network channel and radio channel via which a duplication or a split of the data flow is transferred to the other mobile terminal TE. The memory 203 contains the instructions of the program related to the algorithm as disclosed in the Fig. 9.

The processor 200 controls the operation of the network interface 206 and the wireless interface 205.

The read only memory 202 contains instructions of the program related to the algorithm as disclosed in the Fig. 9, which are transferred, when the base station BS is powered on to the random access memory 203.

The base station BS is connected to the telecommunication network through the network interface 206. As example, the network interface 206 is a DSL (Digital Subscriber Line) modem, or an ISDN (Integrated Services Digital Network) interface, etc.

Through such interface 206, the base station BS transfers and/or receives information such as data flows, duplication or splits of data flows or other signalling messages with the server AGW and the other base stations BS of the wireless cellular telecommunication network.

Through the wireless interface 205, the base station BS receives messages from the mobile terminal TE. The messages are according to the present invention representative of a request to switch to a configuration mode of the wireless interface 205 in order not to interfere with the signals received by the mobile terminal TE from other base stations BS or the messages comprise an information representative of an SINR value calculated by the mobile terminal TE considering that at least one base station BS which is currently transferring signals switches to a configuration mode of the wireless interface 205 in order not to interfere with the signals received by the mobile terminal TE from other base stations BS.

The wireless interface 205 is connected to plural antennas BSAnt, that are used to collect and radiate radiowaves from/to the mobile terminal TE.

In the Fig. 2, only one antenna BSAnt is shown, but we can understand that a more important number of antennas BSAnt can be used in the present invention.

**Fig. 3** is a diagram representing the architecture of a mobile terminal of the wireless telecommunication system according to the present invention.

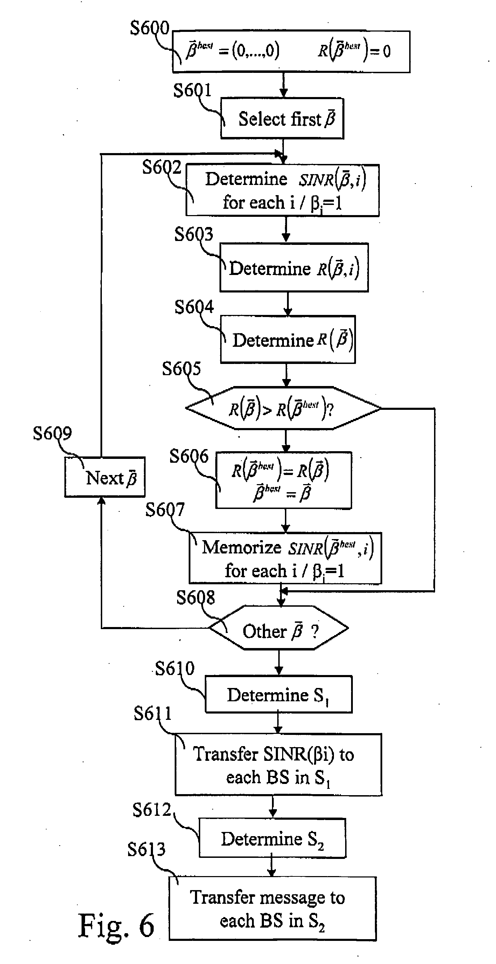

Each mobile terminal TE has, for example, an architecture based on components connected together by a bus 301 and a processor 300 controlled by the programs as disclosed in Figs. 6 to 8.

The bus 301 links the processor 300 to a read only memory ROM 302, a random access memory RAM 303 and a wireless interface 305.

The memory 303 contains registers intended to receive variables and the instructions of the programs related to the algorithms as disclosed in Figs. 6 to 8.

The read only memory 302 contains instructions of the programs related to the algorithms as disclosed in Figs. 6 to 8, which are transferred, when the mobile terminal TE is powered on to the random access memory 303.

The wireless interface 305 comprises means for detecting, measuring and receiving signals transferred by base stations BS through the downlink channel, and for transmitting messages to base stations BS through the uplink channel of the wireless cellular communication system.

The wireless interface 305 is connected to antennas TEAnt1 to TEAntK, that are used to collect and radiate radio waves from/to the base stations BS.

In the Fig. 3, K antennas TEAnt are shown, but we can understand that a single antenna TEAnt can be used in the present invention.

The wireless interface 305 may comprise means for a simultaneous reception of at least two signals transferred by different base stations BS using as example MIMO or using beamforming techniques.

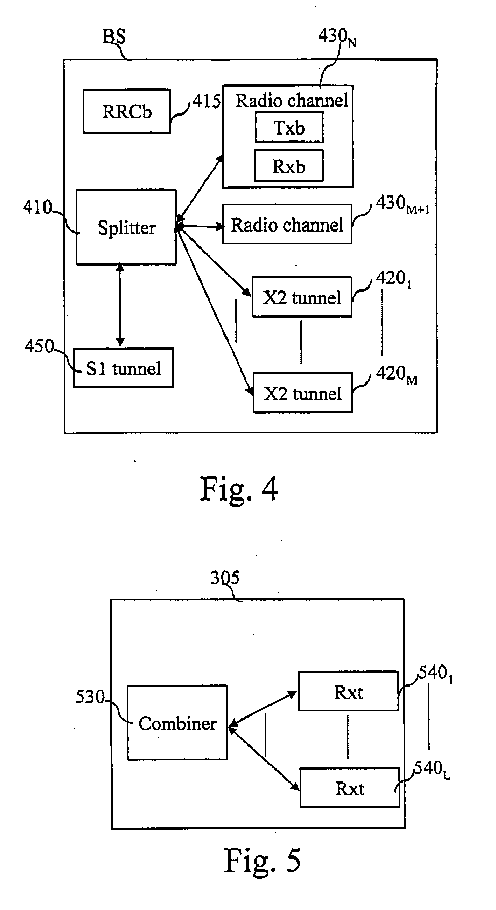

The wireless interface 305 will be disclosed in more details in reference to the Fig. 5.

**Fig. 4** is a diagram representing modules comprised in the base station according to the present invention.

The base station BS comprises a splitter 410 which splits the flow of data to be transferred to the mobile terminal TE into N plural splits. A split comprises data which are different from the one comprised in another split and corresponds to different portions of the data flow. More precisely, the flow of data is decomposed into packets of data, each split is decomposed into different packets of data, each packet of data is marked by the splitter 410 with an information representative of the order of the packet of data in the flow of data.

The information representative of the order of the packet of data in the flow of data is as example a timestamp or a sequence number.

In a variant of realization, the processor 200 of the base station BS executes the task of splitting the flow of data in place of the splitter 410.

In a variant of realisation, the splitter 410 is replaced by a duplication module which duplicates the flow of data.

In Fig. 4, only one splitter 410 is shown but we can understand that a more important number of splitters 410 can be used in the present invention, as the base station can handle more than one mobile terminal TE. The network interface 206 comprises M X2 tunnels modules $420_1$ to $420_M$ for establishing M X2 tunnels which enable the transfer and/or the reception of data with other base stations BS and a S1 tunnel module 450 for establishing a S1 tunnel which can exchange data between the base station BS and the server AGW.

A X2 tunnel is as the one disclosed in the specification entitled 3GPP TS 36.424 and a S1 tunnel is as the one disclosed in the specification entitled 3GPP TS 36.414.

Through each X2 tunnel module 420, one split or duplicated flow of data is transferred.

Complementary to what is shown in the Fig. 4, the N-M splits or duplicated flow of data which are not transferred and/or received through one X2 tunnel module 420, are each transferred and/or received directly by the base station BS through one radio module 430 of its wireless interface 205 which comprises N-M radio modules $430_{M+1}$ to $430_N$.

Splits or duplications of data flow, exchanged between the base station BS and mobile terminals TE not being handled by the base station BS, are relayed between radio channel modules 430 and X2 tunnels 420 not represented in the Fig. 4.

Each radio module 430 comprises a transmitter Txb and a receiver Rxb.

As example, each radio module contains for each mobile terminal TE with which duplications or splits of a data flow are being transferred, a Radio Link Control stack and a Medium Access Control stack, responsible for segmenting and scheduling downlink data packets on the transmitter Txb, using varying transfer formats Modulation and Coding Scheme (MCS) so as to fit with the SINR received from the mobile terminal TE.

Each transmitter Txb also contains means for transmitting signals to each mobile terminal TE to which duplications or splits of a data flow have to be transferred as well as means for transmitting other radio signals, such as pilots or common channels, carrying broadcast or paging information.

Each transmitter Txb also contains a scheduler enabling to transmit only one such signal over any predetermined radio resource, such as a timeslot on a given frequency. To that end, data carried by a duplication or a split of a given data flow are segmented into data segments, which are stored until they can be transmitted alone on an identified radio resource, such as a time slot over a given frequency carrier or subcarrier.

The network interface 206 comprises a Radio Resource Control RRCb protocol module, which is used to configure the transmission scheme by indicating to the Radio Resource Control RRCt protocol module of the mobile terminal TE the active set of transmitters Txb via which duplications or splits of the data flow are transferred to the mobile terminal TE.

In a variant of realization, the processor 200 of the base station BS executes the tasks of the Radio Resource Control RRCb protocol module.

Each via base station BS may regularly send quality indicator information to the splitter 410 through the X2 tunnel. The splitter 410 uses the quality indicator information transferred by each via base station BS to determine, on a per packet basis, through which X2 tunnel each packet of the data flow to be transmitted to the mobile terminal TE should individually be routed, enabling the realisation of different splits with different throughputs.

The base station BS configures the wireless interface 205 in order not to interfere with signals received by the mobile terminal TE from other base stations over a resource element. The base station BS configures the wireless interface 205 by stopping transferring any signal on the predetermined resource element or by setting the power of signals transmitted on the predetermined resource element by the base station BS to a level lower than a predetermined level or by transmitting on the determined resource element, signals not steered in the direction of the mobile terminal TE, as example signals representative of data flows exchanged with other mobile terminals TE, or by transmitting on the determined resource element only pilot signals.

**Fig. 5** is a diagram representing modules comprised in the wireless interface of a mobile terminal of the wireless cellular telecommunication network in which the present invention is implemented.

The wireless interface 305 comprises a combiner 530 which combines the L splits transferred by the base station BS which handles the mobile terminal TE directly or via other base stations BS.

Each receiver Rxt $540_1$ to $540_L$ receives a split or a flow of data from a given transmitter Txb of a base station BS and might exchange with that transmitter Txb some RLC/MAC/PHY control signalling to contribute to the quality of reception of the physical link PHY, e.g. for the purpose of efficient power control, scheduling, MCS or ARQ.

The receiver Rxt derives from the RLC/MAC/PHY signalling on which radio resource data portions of the duplication or of the split have to be received, and recombines the split or the duplicated data flow from the received data portions.

Each receiver Rxt sends the received data to a combiner 530. The combiner 530 collects the data transmitted from the data sources Txb and which are received through various receivers Rxt and generates one single data flow to the destination application.

In a variant of realization, the processor 300 of the mobile terminal TE executes the tasks of combining the splits in place of the combiner 530.

**Fig. 6** is a first example of an algorithm executed by a mobile terminal according to the present invention.

More precisely, the present algorithm is executed by the processor 300 of the mobile terminal TE.

The present algorithm is executed for each resource element of the radio channel.

The resource element may be a time slot over a chunk of frequencies.

At step S600, the processor 300 sets the value of a vector noted $\vec{\beta}^{best}$ to the null value.

The vector $\vec{\beta}^{best}$ has a dimension equal to L, the size of the set of base stations BS as determined by the base station BS which is handling the mobile terminal TE. L equals the actual number of receivers Rxt of the mobile terminal TE. Each coefficient $\beta_i^{best}$, with index i=1 to L, of the vector $\vec{\beta}^{best}$ may take the null value or the value one.

The null value of the coefficient $\beta_i^{best}$ is representative of the case wherein the base station $BS_i$ which transfers signals received by the receiver 540i enters in a transmission mode which does not interfere with signals received from other base stations BS.

The value one of the coefficient $\beta_i^{best}$ is not representative of the case wherein the base station $BS_i$ which transfers signals received by the receiver 540i enters in a transmission mode which does not interfere with signals received from other base stations BS.

The base stations $BS_i$ of the set of base stations BS for which the coefficient $\beta_i^{best}$ has value one, belong to the first subset of base stations BS, while other base stations $BS_i$ of the set of base stations BS for which the coefficient $\beta_i^{best}$ has null value, belong to the second subset of at least one base station BS.

At the same step, the processor 300 sets the variable $R(\vec{\beta}^{best})$ to the null value. The variable $R(\vec{\beta}^{best})$ is representative of the maximum throughput that can be achieved or that can be expected, on the resource element for vector $\vec{\beta}^{best}$ when all the base stations BS of the first subset of base stations BS transfer signals representative of the flow of data to the mobile terminal TE and each base station BS of the second subset of at least one base station BS is in a transmission mode which does not interfere with signals received from base stations BS of the first subset.

At next step S601, the processor 300 selects a first vector $\vec{\beta}$.

At next step S602, the processor 300 determines the expected Signal to Interference-plus-Noise Ratio *SINR* $(\vec{\beta}^{best},i)$ for each index i for which coefficient $\beta_i$ is equal to the value one.

The determination of an expected SINR ratio is disclosed in reference to the Fig. 7.

**Fig. 7** is an example of an algorithm executed by a mobile terminal in order to determine expected Signal to Interference-plus-Noise Ratios.

More precisely, the present algorithm is executed by the processor 300 of the mobile terminal TE.

At step S700, the processor 300 obtains from the wireless interface 305, the coupling loss $G_i$ between the mobile terminal TE and the base station $BS_i$, including effects of each of transmit and received antennas, distance attenuation, slow and fast fading of the radio channel between each transmit and received antenna.

At next step S701, the processor 300 obtains from the wireless interface 305, the interference component $I_{exti}$ received by the receiver 540i from base stations BS not belonging to the set of base stations BS.

At next step S702, the processor 300 obtains from the wireless interface 305, the matrix A which is composed of the coefficients $\alpha_{u,v}$ with $u \leq L, v \leq L$ which reflects the portion of power received from $BS_u$ which interferes with the signals received from base stations $BS_v$. This portion can reflect the capability of the receiver Rxt of the mobile terminal TE to reduce interference between signals received on the same resource element, e.g. with beamforming or interference cancellation capability of the receiver 540.

The different receivers 540 of one mobile terminal TE might share the same set of K antennas TEAnt, as data coming from a given Rxt is typically coming from directions which differ from one base station BS to another, and can be separated by means of smart antenna techniques, such as beamforming.

This is realised by using coupling coefficients of antennas according to state of the art beamforming techniques.

Assume that spatial distribution (over $[0, 2\pi[$ ) of the channel response between the mobile terminal TE and the $i^{th}$ base station $BS_i$ is given by $S_i(\theta)$, it is possible the select a vector $\vec{\lambda_i}$ of weight $\lambda_{ij}, j<K$, that maximises the SINR as output of the antenna array. To each vector $\vec{\lambda_i}$ can be associated a spatial distribution $g_i(\theta)$ of the array response, which is function of the array dimensioning and geometry. In that case, the term $\alpha_{uv}$ can be expressed as

$$\alpha_{uv} = \frac{\int_0^{2\pi} g_u(\theta)S_v(\theta)d\theta}{\int_0^{2\pi} g_u(\theta)S_u(\theta)d\theta}$$

where $S_u(\theta)$ represents the spatial response of the channel between base station $BS_u$ and the set of antennas TEAnt of the mobile terminal TE.

In an alternative implementation, one could also use antenna combination/selection instead of using beamforming. This may be useful in the case where antennas TEAnt in a mobile terminal TE are used for diversity combining, and/or with different antenna shapes, directivity or polarisations.

Other spatial division techniques may be used also, combining the MIMO capability of each base station BS. In that case, the signal received at antenna 1, with $1 < L$, is the sum of L complex contributions $g_{li}$ from surrounding base stations BS, with $i<L$.

In this more general case of multiple antenna reception, it is also possible to find a weight factor a vector $\vec{\lambda_i}$ of complex weights $\lambda_{il}, l< L$, that maximises the $SINR(\vec{\beta},i)$ of each $i^{th}$ radio channel. The antenna selection is a special restriction case, where all $\lambda_{ik}, k< K_{antennas}$ values, are null except one.

In that case, the term $\alpha_{uv}$ can be expressed as :

$$\alpha_{uv} = \frac{\sum_{\forall l \leq L} g_{lv}\lambda_{ul}}{\sum_{\forall l \leq L} g_{lu}\lambda_{iv}}$$

where $g_{lu}$ represents the complex response of the channel between base station $BS_u$ and the $1^{th}$ antenna $TEAnt_i$ of the mobile terminal TE.

It has to be noted here that, the more the matrix $A = \{\alpha_{uv}\}$ looks as the identity matrix, the higher is the user throughput that can be reached.

At next step S703, the processor 300 obtains from the wireless interface 305 the power level of the noise component $N_0$ received by the mobile terminal TE.

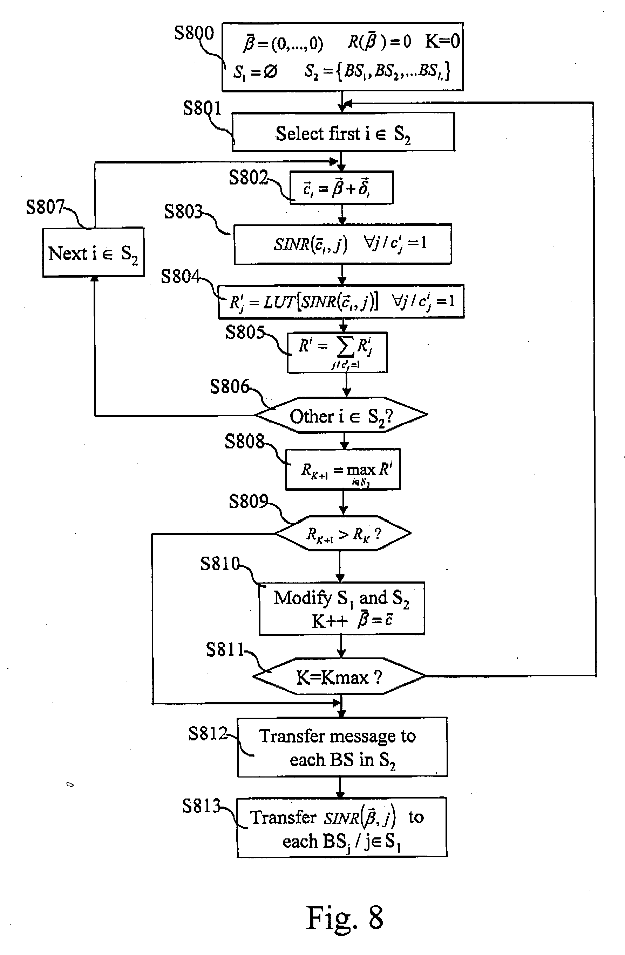

At next step S704, the processor 300 gets the vector $\vec{\beta}$ selected at step S601 or S609 of the Fig. 6 or the vector $\vec{c}$ as disclosed in the algorithm of the Fig. 8.

At next step S705, the processor 300 determines the expected Signal to Interference-plus-Noise Ratio *SINR* $(\vec{\beta},i)$ for each index i for which coefficient $\beta_i$ is equal to the value one using the following formula:

$$SINR(\bar{\beta},i) = \frac{PG_i}{No + I_{ext} + \sum_{\substack{k<L \\ k\neq i \\ \beta_k=1}} G_k\alpha_{ik}P + \sum_{\substack{k<L \\ k\neq i \\ \beta_k=0}} G_k\alpha_{ik}P_{\min}}.$$

P is the maximum transmit power of the base stations BS in the first subset of base stations BS and $P_{\min}$ is the maximum transmit power of the at least one base station BS in the second subset of at least one base station BS. P and $P_{\min}$ are as example provided by each base station BS to the mobile terminal TE at the time of establishing the connections for the delivery of the data flow, or are provided to all terminals TE on the broadcast channel of each transmitter Txb.

In a variant, $P_{\min}$ may be different between the base stations BS and is broadcasted by each base station BS to all the mobile terminals located in their respective cells, e.g. over a broadcast channel.

The determined expected $SINR(\vec{\beta},i)$ for a vector $\vec{\beta}$ and an index i represents the SINR that one can expect for the signals received from the base station $BS_i$, other base station $BS_j$ being transmitting full power P when the coefficient $\beta_j$ equals to the value one and other base station $BS_k$ being transmitting at a reduced power level $P_{\min}$ when coefficient $b_k$ equals null value.

It has to be noted here that, $P_{\min}$ may be equal to null value.

Once the expected Signal to Interference-plus-Noise Ratio $SINR(\vec{\beta},i)$ is determined for each index i for which coefficient $\beta_i$ is equal to the value one, the processor 300 moves from step S602 of the Fig. 6 to the step S603.

At step S603, the processor 300 determines, for each determined $SINR(\vec{\beta},i)$, a throughput $R(\vec{\beta},i)$, using a look-up table which gives the throughput which can be reached under various SINR conditions with the given transmission system, according to the effects of the adaptive choice of transfer format like the modulation order, the coding ratio, the rate matching, etc and the resulting block error rate, which varies with respect to $SINR(\vec{\beta},i)$. Such look-up table typically gives throughput values which can be reached under different SINR levels, and which can be interpolated for any input value SNR.

At next step S604, the processor 300 determines an overall throughput $R(\vec{\beta})$ according to the following formula :

$$R(\bar{\beta}) = \sum_{\forall i / \beta_i=1} R(\bar{\beta},i)$$

At next step S605, the processor 300 checks if $R(\vec{\beta}) > R(\vec{\beta}^{best})$.

If $R(\vec{\beta}) > R(\vec{\beta}^{best})$, the processor 300 moves to step S606. Otherwise, the processor 300 moves to step S608.

At step S606, the processor 300 sets the variable $R(\vec{\beta}^{best})$ to the value $R(\vec{\beta})$ and sets vector $\vec{\beta}^{best}$ to the value of the vector $\vec{\beta}$.

At next step S607, the processor 300 memorizes in the RAM memory 303 each $SINR(\vec{\beta}^{best},i)$ determined at step S602 for each index i for which coefficient $\beta_i$ is equal to the value one.

At next step S608, the processor 300 checks if each vector $\vec{\beta}$ has been used for the determination of the maximum throughput that can be achieved when base stations BS of a first subset of base stations BS transfer signals representative of the flow of data to the mobile terminal TE and the base station or the base stations BS of a second subset of at least one base station BS will not transfer signals representative of the flow of data to the mobile terminal TE.

As example, the set of vector $\vec{\beta}$ to be used is stored in the ROM memory 302.

As other example, to each vector $\vec{\beta}$ can be associated a canonical number $N(\vec{\beta})$ according to the following formula : $N(\bar{\beta}) = \sum_{\forall i<L} \beta_i 2^i$, and the set of vectors corresponds to the set of canonical numbers comprised between 0 and $2^L$-1.

If each vector $\vec{\beta}$ has been used for the determination of the maximum throughput, the processor 300 moves to step S610. Otherwise, the processor 300 moves to step S609.

At step S609, the processor 300 selects a vector $\vec{\beta}$ which has not yet been used for the determination of the maximum throughput that can be achieved and returns to step S602.

As example, the processor 300 selects a vector $\vec{\beta}$ memorized in the ROM memory 302 which has not yet been used. As other example, the processor increments a counter of canonical numbers N and determines the coefficients $\beta_i$ of vector $\vec{\beta}$ as the $i^{th}$ bit of the binary representation of counter N in internal memory of processor 300.

At step S610, the processor 300 forms a first subset of base stations BS which transfer signals representative of the flow of data to the mobile terminal TE. A base station $BS_i$ is identified in the first subset of base stations BS if the value of the coefficient $\beta_i^{best}$ is equal to one.

At next step S611, the processor 300 commands the transfer of a message comprising the value $SINR(\overline{\beta}^{best},$ *i*) memorised at step S607 to each base station BS$_i$ comprised in the first subset of base stations BS.

At step S612, the processor 300 determines a second subset of at least one base station BS which transfers or transfer signals representative of the flow of data to the mobile terminal TE and which has or have to switch to a transmission mode which does not interfere with signals received from other base stations BS. A base station BS$_i$ is identified in the second subset of at least one base station BS if the value of the coefficient $\beta_i^{best}$ is equal to null value.

At next step S613, the processor 300 commands the transfer of a message to each base station BS of the second subset of at least one base station BS which is representative of a request to switch to a transmission mode which does not interfere with signals received by the mobile terminal TE from other base stations BS.

**Fig. 8** is a second example of an algorithm executed by a mobile terminal according to the present invention.

The present algorithm is executed for each resource element of the radio channel.

The resource element may be a time slot over a chunk of frequencies.

At step S800, the processor 300 sets the value of a vector noted $\vec{\beta}$ to the null value.

The vector $\vec{\beta}$ has a dimension equal to L, the size of the set of base stations BS, through which the data flow is transferred, is determined by the base station BS which handles the mobile terminal TE. L equals the number of receivers Rxt of the mobile terminal TE which is also the maximum number of base stations BS which can transfer signals to the mobile terminal TE. Each coefficient $\beta_i$ with index i=1 to L of the vector $\vec{\beta}$ may take the null value or the value one.

The null value of the coefficient $\beta_i$ is representative of the case wherein the base station BS$_i$ which transfers signals received by the receiver 540i switches to a transmission mode which does not interfere with signals received from other base stations BS.

The value one of the coefficient $\beta_i$ is not representative of the case wherein the base station BS$_i$ which transfers signals received by the receiver 540i enters in a transmission mode which does not interfere with signals received by the mobile terminal TE from other base stations BS.

At the same step, the processor 300 sets the variable $R(\vec{\beta})$ to the null value. The variable $R(\vec{\beta})$ is representative of the throughput that can be achieved when base stations BS of a first subset of base stations BS transfer signals representative of the flow of data to the mobile terminal TE and a base station or base stations BS of a second subset of at least one base station BS enters or enter in a transmission mode which do not interfere with signals representative of the flow of data transferred to the mobile terminal by the base stations of the first subset of base stations.

At the same step, the processor 300 sets the variable K to null value and the variable $R_0$ to the null value.

At the same step, the processor 300 sets a first subset S$_1$ of base stations BS which transfer signals representative of the flow of data to the mobile terminal TE to empty. The processor 300 sets a second subset S$_2$ of at least one base station BS which transfers signals representative of the flow of data to the mobile terminal TE which has to enter in a transmission mode which does not interfere with signals received by the mobile terminal TE from other base stations BS. The second subset S$_2$ of at least one base station BS comprises all the possible base stations BS which may transfer signals to the mobile terminal TE as decided by the base station BS which handles the mobile terminal TE.

In a variant, the first subset S$_1$ is initialised to contain the base station BS which handles the mobile terminal TE and the second subset S$_2$ is initialised not to contain the base station BS which handles the mobile terminal TE.

At next step S801, the processor 300 selects a first base station BS$_i$ which belongs to the second subset S$_2$.

At next step S802, the processor 300 sets the coefficients $c_j^i$ of a vector $\overline{c}^i$ to $c_j^i = \beta_i$ if $j \neq i$ and $c_j^i = 1$ if j=i , with j=1 to L.

At next step S803, the processor 300 determines the expected Signal to Interference-plus-Noise Ratio $SINR(\vec{c}^i,j)$ for each index j for which coefficient $c_j^i$ is equal to the value one. Each expected Signal to Interference-plus-Noise Ratio $SINR(\vec{c}^i,j)$ is determined as disclosed in the algorithm of the Fig. 7.

At step S804, the processor 300 determines, for each expected $SIMR(\vec{c}^i,j)$, a throughput $R_j^i$, using a Look-up table which reflects the effects of the adaptive choice of transfer format like the modulation order, the coding ratio, the rate matching, etc and the resulting block error rate, which varies with respect to SINR level.

At next step S804, the processor 300 determines an overall throughput $R^i$ according to the following formula :

$$R^i = \sum_{\forall j / c_j^i = 1} R_j^i.$$

At next step S805, the processor 300 checks if each base station BS identified in the second subset S$_2$ has

been selected.

If each base station BS, identified in the second subset $S_2$ of at least one base station BS, has been selected, the processor 300 moves to step S808.

Otherwise, the processor 300 moves to step S807, selects the next index i for which the base station $BS_i$ is present in subset $S_2$ and returns to step S802.

At step S808, the processor 300 sets the value of the maximum achievable throughput $R_{K+1}$ to the maximum value $R^{thext}$ among the determined throughputs $R^i$ determined at step S805.

At that step, the processor 300 also identifies the index ibest of base station $BS_{ibest}$ which maximises the value of the determined throughputs $R^i$ determined at step S805 over all indexes i which were selected at steps S807 for the current value of K.

At next step S809, the processor 300 checks if the maximum achievable throughput $R_{K+1}$ is strictly upper than the maximum achievable throughput $R_K$ determined previously.

If $R_{K+1} > R_K$, the processor 300 moves to step S810. Otherwise, the processor 300 moves to step S812.

At step S810, the processor 300 modifies the first subset of base stations BS by including in it, the base station $BS_{ibest}$ identified at step S808. The processor 300 modifies the second subset of at least one base station BS by removing the base station $BS_{ibest}$ from it.

At the same step, the processor 300 increments the variable K and sets the coefficients $\beta_j$, with j=1 to L to the value of $\boldsymbol{\beta_j = c_j^{ibext}}$. In a variant, only coefficient $\beta_{ibest}$ is modified and set to 1.

At next step S811, the processor 300 checks if the variable K is equal to the maximum number Kmax of base stations BS that may transmit signals to the mobile terminal TE.

If K is equal to Kmax, the processor 300 moves to step S812. Otherwise, the processor 300 returns to step S801.

At step S812, the processor 300 commands the transfer of messages to each base station $BS_j$ comprised in the first subset of base stations BS, each containing the determined expected Signal-to-interference-plus-noise level $SINR(\vec{\beta},j)$ of signals to be transmitted by each of base station $BS_j$ on each resource element of the radio channel. $SINR(\vec{\beta},j)$ can then be used by base station $BS_j$ to adapt the transmit modulation and coding scheme of the signal to be transmitted to the mobile terminal, to fit with that expected SINR level on each resource element. The $SINR(\vec{\beta},j)$ value was computed and stored at step S803 for the vector $\vec{c}^{thest}$ which replaced vector $\vec{\beta}$ at step S810.

At step S813, the processor 300 commands the transfer of a message to each base station BS of the second subset of at least one base station BS which is representative of a request to enter in a transmission mode which does not interfere with signals received by the mobile terminal TE from other base stations BS.

In a variant, for each resource element of the radio channel, the processor 300 commands the receivers Rxt 430j of signals transferred by base stations $BS_j$ which belong to the second subset to suspend reception of signals on the involved resource element, and commands to receivers Rxt 430k of signals received from base stations $BS_k$ which belong to the first subset to operate reception of signals on the involved resource element.

**Fig. 9** is an example of an algorithm executed by a base station according to the present invention.

More precisely, the present algorithm is executed by the processor 200 of each base station BS.

At step S900, the processor 200 commands the wireless interface 206 to start the transmission of data of a duplication or a split of a data flow to the mobile terminal TE. The data is as example received from the splitter 410 of Fig. 4 if the base station is handling the mobile terminal TE or is received via a X2 tunnel 420 if the base station BS is not handling the mobile terminal TE.

At next step S901, the processor 200 waits for the reception of a message transferred by the mobile terminal TE.

If a message transferred by the mobile terminal TE is received, the processor 200 moves to step S902.

At step S902, the processor 200 checks if the message is representative of a request to switch to a transmission mode which does not interfere with signals received from other base stations BS.

If the message is representative of a request to switch to a transmission mode which does not interfere with signals received from other base stations BS, the processor moves to step S904. Otherwise, the processor 200 moves to step S903.

At step S903, the processor 200 reads in the received message, the SINR that can be measured by the mobile terminal TE when base stations BS of a first subset of base stations BS transfer signals representative of the flow of data to the mobile terminal TE and when the base station or the base stations BS of a second subset of at least one base station BS will enter in a transmission mode which does not interfere with signals received from other base stations BS by the mobile terminal TE.

The received SINR is then used by the processor 200 in order to adapt the transmission scheme for the mobile terminal TE. Once data has been transmitted over the concerned resource element, the processor 200 moves back to step 901.

At step S904, the processor 200 configures the wireless interface 205 in order not to interfere with the signals received by the mobile terminal TE over the resource element by stopping transferring any signal on the predetermined resource element or by setting the power of signals transmitted on the predetermined resource element by the base station BS to a level lower than a predetermined level or by transmitting on the determined resource element signals not steered in the direction of the mobile terminal TE, as example signals representative of data flows exchanged with other mobile terminals TE, and/or by transmitting on the determined resource element only pilot signals.

Naturally, many modifications can be made to the embodiments of the invention described above without departing from the scope of the present invention.

**Claims**

1. Method for managing a set of base stations of a wireless cellular telecommunication network, wherein a mobile terminal receives a flow of data from the base stations of the set of base stations, **characterised in that** the method comprises the steps executed by the mobile terminal of:

   - determining a first subset of base stations comprising base stations which may continue to transfer to the mobile terminal signals representative of the flow of data,
   - determining a second subset of at least one base station which comprises at least one base station of the set of base stations which is not comprised in the first subset,
   - transferring a message to each base station comprised in the second subset of at least one base station, the message requesting the base station to switch to a communication mode which does not interfere with signals representative of the flow of data transferred to the mobile terminal by the base stations of the first subset of base stations.

2. Method according to claim 1, **characterised in that** the first subset of base stations and the second subset of at least one base station are determined by :

   - measuring the quality of a radio channel between each base station in the set of base stations and the mobile terminal,
   - obtaining, for each base station of the set of base stations which transfer signals representative of the flow of data to the mobile terminal, information from at least a part of the measurements and considering a third subset of base stations which transfer to the mobile terminal signals representative of the flow of data and considering a fourth subset of at least one base station which is in a communication mode which does not interfere with signals representative of the flow of data transferred to the mobile terminal by the base stations of the third subset of base stations,
   - comparing information obtained from at least a part of the measurements considering the third subset of base stations and the fourth subset of at least one base station to another information obtained from at least another part of the measurements considering a fifth subset of base stations which transfer to the mobile terminal signals representative of the flow of data and considering a sixth subset of at least one base station which is in a communication mode which does not interfere with signals representative of the flow of data transferred to the mobile terminal by the base stations of the fifth subset of base stations,
   - determining that the first subset of base stations and the second subset of at least one base station are the considered third subset of base stations and the fourth subset of at least one base station or are the considered fifth subset of base stations and the sixth subset of at least one base station according to the comparison of information to the other information.

3. Method according to claim 2, **characterized in that** the obtained information and other information are expectations of the maximum throughput which can be reached considering that the base stations in the third and fifth subsets of base stations transfer signals representative of the flow of data to the mobile terminal.

4. Method according to claim 2, **characterized in that** the obtained information and other information are expectations of the maximum throughput which can be reached considering that each base station in the fourth and sixth subsets of at least one base station is in a communication mode which does not interfere with signals representative of the flow of data transferred to the mobile terminal by the base stations in the third and fifth subsets of base stations.

5. Method according to claim 3 or 4, **characterized in that** each expectation of the maximum throughput is determined by calculating an expected Signal to Interference-plus-Noise Ratio for the signals to be received from the base stations in the third or fifth subset of base stations considering that each base station of the fourth or sixth subset of at least one base station is in the communication mode which does not interfere with signals representative of the flow of data transferred to the mobile terminal by the base stations of the third or fifth subset of base stations.

6. Method according to claim 5 **characterized in that** each expected Signal to Interference-plus-Noise Ratio for the signals to be received from the base stations in the third or fifth subset of base stations is determined considering that each power strength of signals transferred by each base station of the fourth or sixth subset of at least one base station is lower than a predetermined value.

7. Method according to claim 6**, characterized in that** a predetermined value is obtained for each base station of the second subset of at least one base station and **in that** each predetermined value is considered for the determination of the expected Signal to Interference-plus-Noise Ratio for the signals to be received from the base stations in the first subset of base stations.

8. Method according to any of the claims 1 to 7, **characterized in that** each base station of the first subset of base stations transfers to the mobile terminal different parts of the flow of data.

9. Method according to any of the claims 1 to 7, **characterized in that** each base station of the first subset of base stations transfers to the mobile terminal the same flow of data.

10. Method according to any of the claims 1 to 9, **characterized in that** the method comprises further step of transferring to each base station of the first subset, a message comprising the determined expected interference plus noise component of the signal to be received from the base station considering that each base station of the second subset of least one base station switches to a communication mode which does not interfere with signals representative of the flow of data transferred to the mobile terminal by the base stations of the first subset of base stations.

11. Method according to any of the claim 1. to 10, **characterised in that** the method comprises further steps, executed by the at least one base station of the second subset of at least one base station , of :

- receiving, from the mobile terminal, a message requesting the base station to switch to a communication mode which does not interfere with signals representative of the flow of data transferred to the mobile terminal by the base stations of the first subset of base stations,
- switching to a communication mode which does not interfere with signals representative of the flow of data transferred to the mobile terminal by the base stations of the first subset of base stations.

12. Method according to claim 11, **characterised in that** the communication mode which does not interfere with signals representative of the flow of data transferred to the mobile terminal by the base stations of the first subset of base stations is a communication mode wherein the power strength of the signals transferred by the at least one base station of the second subset is lower than a predetermined value.

13. Method according to claim 12, further comprising step executed by the base stations of transferring the predetermined value to the mobile terminal.

14. Method according to any of the claims 1 to 13, **characterized in that** the signals representative of a flow of data are transferred to the mobile terminal in a channel, the channel comprising plural channel resource elements and **in that** the method is executed for each channel resource element.

15. Device for managing a set of base stations of a wireless cellular telecommunication network, wherein a mobile terminal receives a flow of data from the base stations of the set of base stations, **characterised in that** the device is included in the mobile terminal and comprising:

- means for determining a first subset of base stations comprising base stations which may continue to transfer to the mobile terminal signals representative of the flow of data,
- means for determining a second subset of at least one base station which comprises at least one base station of the set of base stations which is not comprised in the first subset,
- means for transferring a message to each base station comprised in the second subset of at least one base station, the message requesting the base station to switch to a communication mode which does not interfere with signals representative of the flow of data transferred to the mobile terminal by the base stations of the first subset of base stations.

**16.** Wireless cellular telecommunication network comprising a mobile terminal according to claim 15, **characterized in that** the at least one base station of the second subset of at least one base station comprises :

- means for receiving, from the mobile terminal, a message requesting the base station to switch to a communication mode which does not interfere with signals representative of the flow of data transferred to the mobile terminal by the base stations of the first subset of base stations,
- means for switching in a communication mode which does not interfere with signals representative of the flow of data transferred to the mobile terminal by the base stations of the first subset of base stations.

**17.** Computer program which can be directly loadable into a programmable device, comprising instructions or portions of code for implementing the steps of the method according to claims 1 to 14, when said computer program is executed on a programmable device.

Fig. 1

BS

200 — Processor — Network I/F —206

203 — RAM — Wireless I/F —205

202 — ROM ⌐ 201

BSAnt

## Fig. 2

TE

300 — Processor

303 — RAM — wireless I/F —305

302 — ROM ⌐ 301

TEAnt1

TEAntK

## Fig. 3

BS                    430$_N$

RRCb  415      Radio channel

                    Txb

                    Rxb

410                  Radio channel      430$_{M+1}$

Splitter

                    X2 tunnel      420$_1$

450

S1 tunnel          X2 tunnel      420$_M$

## Fig. 4

305

                    Rxt      540$_1$

530  Combiner

                    Rxt      540$_L$

## Fig. 5

S600 $\vec{\beta}^{best} = (0,...,0) \qquad R(\vec{\beta}^{best}) = 0$

S601 Select first $\vec{\beta}$

S602 Determine $SINR(\vec{\beta}, i)$ for each i / $\beta_i = 1$

S603 Determine $R(\vec{\beta}, i)$

S604 Determine $R(\vec{\beta})$

S605 $R(\vec{\beta}) > R(\vec{\beta}^{best})$?

S609 Next $\vec{\beta}$

S606 $R(\vec{\beta}^{best}) = R(\vec{\beta})$ $\vec{\beta}^{best} = \vec{\beta}$

S607 Memorize $SINR(\vec{\beta}^{best}, i)$ for each i / $\beta_i = 1$

S608 Other $\vec{\beta}$ ?

S610 Determine $S_1$

S611 Transfer SINR($\beta$i) to each BS in $S_1$

S612 Determine $S_2$

S613 Transfer message to each BS in $S_2$

Fig. 6

S700 — Get Gi

S701 — Get $I_{exti}$

S702 — Get A

S703 — Get $N_0$

S704 — Get $\bar{\beta}$

S705 — Calculate $SINR_i(\bar{\beta})$

Fig. 7

S900 — Transfer flow of data or split

S901 — Receive Message?

S902 — Request no interfere mode?

S903 — Use SINR

S904 — No interference mode

Fig. 9

S800 — $\bar{\beta} = (0,...,0)$   $R(\bar{\beta}) = 0$   $K = 0$
$S_1 = \varnothing$   $S_2 = \{BS_1, BS_2, ... BS_{l_s}\}$

S801 — Select first $i \in S_2$

S802 — $\vec{c}_i = \bar{\beta} + \vec{\delta}_i$

S803 — $SINR(\vec{c}_i, j)$   $\forall j / c_j^i = 1$

S804 — $R_j^i = LUT[SINR(\vec{c}_i, j)]$   $\forall j / c_j^i = 1$

S805 — $R^i = \sum_{j/c_j^i=1} R_j^i$

S806 — Other $i \in S_2$?

S807 — Next $i \in S_2$

S808 — $R_{K+1} = \max_{i \in S_2} R^i$

S809 — $R_{K+1} > R_K$?

S810 — Modify $S_1$ and $S_2$
$K++$   $\bar{\beta} = \vec{c}$

S811 — $K = Kmax$?

S812 — Transfer message to each BS in $S_2$

S813 — Transfer $SINR(\bar{\beta}, j)$ to each $BS_j / j \in S_1$

Fig. 8

Europäisches
Patentamt
European
Patent Office
Office européen
des brevets

**EUROPEAN SEARCH REPORT**

Application Number

EP 08 00 6256

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/066666 A (QUALCOMM INC [US]; MUDIGONDA RAVISHANKER [US]; AHSAN SYED NADEEM [US]) 5 August 2004 (2004-08-05) | 1,8-17 | INV. H04B7/02 |
| A | * paragraph [0004] * <br> * paragraph [0007] - paragraph [0009] * <br> * paragraph [0022] - paragraph [0023] * <br> * paragraph [0028]; figure 3 * <br> * paragraph [0030] - paragraph [0035]; figure 4 * <br> * paragraph [0057] * <br> ----- | 2-7 | |
| A | EP 1 791 268 A (SAMSUNG ELECTRONICS CO LTD [KR]) 30 May 2007 (2007-05-30) <br> * paragraph [0052]; figure 4E * <br> ----- | 1-17 | |
| A | EP 1 179 961 A (LUCENT TECHNOLOGIES INC [US]) 13 February 2002 (2002-02-13) <br> * paragraph [0003] - paragraph [0004] * <br> * paragraph [0009] - paragraph [0015]; figure 1 * <br> ----- | 1-17 | TECHNICAL FIELDS SEARCHED (IPC) |
| A | WO 01/22763 A (NOKIA NETWORKS OY [FI]; SALONAHO OSCAR [FI]) 29 March 2001 (2001-03-29) <br> * page 2, line 22 - line 29 * <br> * page 4, line 21 - page 5, line 16 * <br> * page 9, line 16 - line 33; figure 2 * <br> ----- | 1-17 | H04B <br> H04Q |

The present search report has been drawn up for all claims

| Place of search | Date of completion of the search | Examiner |
|---|---|---|
| Munich | 28 October 2008 | Sieben, Stefan |

EPO FORM 1503 03.82 (P04C01)

## ANNEX TO THE EUROPEAN SEARCH REPORT
## ON EUROPEAN PATENT APPLICATION NO.

EP 08 00 6256

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2008

| Patent document cited in search report | | Publication date | Patent family member(s) | | Publication date |
|---|---|---|---|---|---|
| WO 2004066666 | A | 05-08-2004 | AU | 2004206417 A1 | 05-08-2004 |
| | | | BR | PI0406919 A | 03-01-2006 |
| | | | CA | 2514074 A1 | 05-08-2004 |
| | | | CN | 1762172 A | 19-04-2006 |
| | | | EP | 1586218 A1 | 19-10-2005 |
| | | | JP | 2006516854 T | 06-07-2006 |
| | | | KR | 20050088362 A | 05-09-2005 |
| | | | MX | PA05007840 A | 18-10-2005 |
| | | | US | 2004176090 A1 | 09-09-2004 |
| EP 1791268 | A | 30-05-2007 | NONE | | |
| EP 1179961 | A | 13-02-2002 | DE | 60101294 D1 | 08-01-2004 |
| | | | DE | 60101294 T2 | 23-09-2004 |
| | | | JP | 3926591 B2 | 06-06-2007 |
| | | | JP | 2002095031 A | 29-03-2002 |
| | | | US | 6535738 B1 | 18-03-2003 |
| WO 0122763 | A | 29-03-2001 | AU | 7292400 A | 24-04-2001 |
| | | | BR | 0014108 A | 14-05-2002 |
| | | | CA | 2385309 A1 | 29-03-2001 |
| | | | CN | 1382356 A | 27-11-2002 |
| | | | CN | 1625295 A | 08-06-2005 |
| | | | EP | 1214857 A1 | 19-06-2002 |
| | | | FI | 992005 A | 20-03-2001 |
| | | | JP | 3842646 B2 | 08-11-2006 |
| | | | JP | 2003510919 T | 18-03-2003 |
| | | | JP | 2006295950 A | 26-10-2006 |
| | | | US | 7180878 B1 | 20-02-2007 |

EPO FORM P0459

For more details about this annex : see Official Journal of the European Patent Office, No. 12/82